Europäisches Patentamt

European Patent Office

Office européen des brevets

(11) Veröffentlichungsnummer: **0 194 460**
**B1**

(19)

(12) EUROPÄISCHE PATENTSCHRIFT

(45) Veröffentlichungstag der Patentschrift:
**01.06.88**

(21) Anmeldenummer: **86101813.3**

(22) Anmeldetag: **13.02.86**

(51) Int. Cl.⁴: **B 29 C 45/26**

(54) Spritzgiessvorrichtung.

(30) Priorität: **15.03.85 DE 8507696 U**

(43) Veröffentlichungstag der Anmeldung:
**17.09.86 Patentblatt 86/38**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**DE - A - 3 301 272**

(73) Patentinhaber: **Firma Günther Heisskanaltechnik,
Sachsenberger Strasse 3, D-3558 Frankenberg/Eder
(DE)**

(72) Erfinder: **Günther, Herbert, Unterauestrasse 14,
D-3559 Allendorf/Eder (DE)**

(74) Vertreter: **Olbricht, Karl Heinrich, Dipl.-Phys., Am
Weinberg 15, D-3556 Niederweimar (DE)**

## Beschreibung

Die Erfindung bezieht sich auf eine Vorrichtung gemäss dem Oberbegriff von Anspruch 1.

Es gibt bereits Heisskanalsysteme dieser Art (vgl. DE-A-3 301 272), die mit gutem Erfolg einsetzbar sind, um die Mengenverarbeitung der verschiedensten Materialien durchzuführen. Hierbei kommt es sehr auf die richtige Einstellung der Fliessfähigkeit und mithin auf angemessene Erwärmung der Spritzgussmasse vor allem im letzten Arbeitsschritt an. Bei Überhitzung würde das zu verarbeitende Material schädliche Einwirkungen erfahren, z.B. durch Depolymerisation, wogegen bei unzureichender Beheizung das Material versteift und die Vorrichtung verstopft. Daher ist es wichtig, in der gesamten Vorrichtung einschliesslich Verteiler eine möglichst gleichmässige Temperaturverteilung zu erreichen, insbesondere in der Heisskanaldüse.

Zum Temperaturausgleich entlang von masseführenden Systemen hat man verschiedene Massnahmen ergriffen, in erster Linie unter Einsatz von Werkstoffen mit geeigneten Wärmeleitwerten. Bei Heizelementen wurden Materialien mit verschiedenen spezifischen elektrischen Widerständen und unterschiedliche Querschnitts-Abmessungen verwendet, um Heizwärme an gewünschter Stelle konzentriert zu erzeugen und an anderen Stellen abzuleiten. Bei gegebener Heizleistung bestimmt sich das erreichbare Temperaturniveau durch die Wärmemenge, die an der Stelle der grössten Wärmeabfuhr erzeugt werden kann. Dies ist bei Heisskanalvorrichtungen in der Regel die Verbindungsstelle zwischen den Heizelementen und den äusseren Bauteilen, z.B. Stütz- und Gehäuseteilen.

Der Erfindung liegt daher die Aufgabe zugrunde, eine Vorrichtung der eingangs genannten Art mit einfachen konstruktiven Mitteln so fortzuentwickeln, dass der Wirkungsgrad der Heisskanal-Beheizung für die Spritzgussmasse erhöht und der örtliche Temperaturverlauf noch besser vergleichmässigt wird. Namentlich soll die Gebrauchstüchtigkeit mit geringem Aufwand dahingehend weiter verbessert werden, dass mit weitestgehend einstellbarer Temperaturkonstanz sowohl die Verarbeitungsgeschwindigkeit als auch die Qualität der Produkte gesteigert wird.

Diese Aufgabe wird mit den kennzeichnenden Merkmalen des Anspruchs 1 gelöst. Bevorzugte Ausführungsformen der Erfindung sind Gegenstand der Unteransprüche 2 bis 17.

Nach der Erfindung ist zwischen äusserem und innerem Heizelement ein Wärmeausgleichs- oder Leitrohr vorgesehen, das gemäss Anspruch 2 hohe Leitfähigkeit besitzt. Es kann laut Anspruch 3 und 4 mit geeigneten Isolierungen entlang den Heizelementen und an deren Enden abgestützt sein. Die Heizelemente sind wahlweise ein Heizstab und ein Heizrohr oder zwei konzentrische Heizrohre.

Die Erfindung gewährleistet also mit ausserordentlich einfachen Mitteln, dass das durch die Beheizung erzeugte Temperaturgefälle gegenüber dem Gehäuse aufrechterhalten bleibt, wogegen ein Wärmekurzschluss am Heizelement entlang den Längsgradienten weitestgehend abbaut. Die Anwendung thermischer Trenn- und Ausgleichselemente zwischen Gehäuse und äusserem Heizelement und/oder zwischen den Heizelementen macht es möglich, Wärme aus Zonen geringeren Bedarfs in axialer Richtung zu Bereichen grösseren Wärmebedarfs zu leiten, so dass bei gleicher mittlerer Heizleistung auch dort die gleichen Temperaturen erreicht werden und dennoch die Aussenteile relativ kalt bleiben. Dadurch werden die Wärmeverluste herabgesetzt, was zu beträchtlichen Energie-Einsparungen führt. Auf diese Weise wird die Spritzgussmasse im gesamten Fliessquerschnitt sowie über die Länge der bzw. jeder Heisskanaldüse ganz gleichmässig beheizt. Mit geringem Druckabfall fliesst die Schmelze durch Leitungen, vorzugsweise von Kreisquerschnitt, bis zum Anspritzpunkt. Man erzielt wegen der geringen Masse überaus kurze Aufheizzeiten und verhindert mit den Trennelementen auch störende Wärmedehnungen zwischen dem Werkzeug und dem eigentlichen Heisskanalsystem. Eine bequem einrichtbare Temperaturregelung mit zusätzlichen Wärmeausgleichselementen gestattet das sichere Verarbeiten selbst problematischer Massen, beispielsweise flammschutzeingestellter Materialien.

Gemäss Anspruch 5 ist vorgesehen, dass sich zwischen äusserem Heizrohr und Gehäuse zumindest ein Stützkörper befindet, der sich axial wenigstens über einen Längen-Teilbereich des Leitrohres erstreckt. Diese Anordnung, für die selbständiger Schutz beansprucht wird, ist eine bedeutsame Verbesserung der Konstruktion. Sie stellt sicher, dass der mechanische Ausbau alle Anforderungen der Materialverarbeitung erfüllt und insbesondere auch den hohen Druckbeanspruchungen während des bzw. jedes Spritzgiessvorganges gewachsen ist.

Die in den Ansprüchen 6 und 7 angegebenen Einzelheiten der Anordnung und Ausbildung des Stützkörpers stellen weitere Verbesserungen dar, die sowohl zur mechanischen Stabilität als auch zur Gleichmässigkeit der Temperaturverteilung beitragen. Ausgleichselemente gemäss den Ansprüchen 8 und 9 vermindern die von Wärmedehnungen am Heizelement ausgehenden mechanischen Spannungen in den Heisskanalelementen, vor allem in ihrem gehäusenäheren Bereich. Das äussere Rohr, das zur Stromrückführung dient, kann selbst als wenig oder nicht beheiztes Ausgleichselement gestaltet sein. Öffnungen nach Anspruch 10 ermöglichen seitliche Herausführungen, wie sie für Mehrfach-Spritzvorrichtungen benötigt werden.

Insbesondere verteilerseitig kann laut Anspruch 11 wenigstens eine Trennscheibe angeordnet sein, die vorzugsweise aus isolierbeschichtetem Stahl besteht und gemäss Anspruch 12 dicht an das Gehäuse und/oder an das äussere Heizrohr anschliesst. Mit diesen Abstützungen ist es möglich, ein äusseres, gehäusenahes Vorbeifliessen von Spritzgussmaterial zuverlässig zu unterbinden, also die gesamte Schmelze durch die Heisskanäle zu zwingen.

Eine wichtige Weiterbildung der Erfindung ist in Anspruch 13 gekennzeichnet. Danach können wenigstens zwei in gemeinsamem Abstand zum Gehäuse angeordnete Verteilerrohre mit Teilen ihrer Mantelflächen formschlüssig und/oder in Linienberührung, jedoch elektrisch isoliert, aneinander anschliessen, wodurch sich ein übersichtlicher Vorrichtungsaufbau für eine Mehrfach-Spritzanordnung mit gleichen Fliesswegen ergibt. Damit wird ein infolge der Reibungsverluste für alle Anspritzungen gleicher Druckabfall erzielt, was für ein gleichmässiges Füllen von mehrwertigen Werkzeugen zur Erzeugung hochpräziser Artikel unbedingt erforderlich ist. Derartige Anordnungen waren bislang nur in voll aufgeheizten Verteilern mit grossen Wärmeverlusten zum Werkzeug hin möglich. Ausgestaltungen der Mehrfach-Spritzanordnung sind Gegenstand der Ansprüche 14 bis 17.

Weitere Merkmale, Einzelheiten und Vorteile der Erfindung ergeben sich aus dem Wortlaut der Patentansprüche sowie aus der nachfolgenden Beschreibung von Ausführungsbeispielen anhand der Zeichnung. Darin zeigen:

Fig. 1 eine Längsschnitt-Teilansicht einer erfindungsgemässen Vorrichtung,

Fig. 2 eine Axialschnittansicht einer Düse,

Fig. 3 eine Axialschnittansicht einer anderen Ausführungsform einer Düse,

Fig. 4 eine Längsschnitt-Teilansicht einer weiteren Ausführungsform ähnlich Fig. 1 und

Fig. 5 eine Längsschnitt-Teilansicht einer Mehrfach-Spritzvorrichtung.

Eine insgesamt mit 10 bezeichnete Vorrichtung hat ein Gehäuse 12 mit einem Verteiler 14. Bis zu einer Hohlraumbegrenzung 16 im Gehäuse 12 reicht eine Wärmeisolation 18, welche eine wärme- und materialführende Anordnung umschliesst. Diese besteht aus einem Heizleiter 20, der über eine Elektrode mit einer Spannungsquelle verbunden ist. Eine Isolier-Hüllschicht 24 trennt den Heizleiter 20 von einem äusseren Rohr 30, das zum thermischen Spannungsausgleich und zur Stromrückführung an das Gehäuse 12 dient, welches mit einem Masse-Anschluss versehen ist. Die elektrischen Anschlüsse sind in üblicher Weise gekennzeichnet; der Stromverlauf ist mit einfachen Pfeilen angedeutet.

Die Elektrode 22 ist von einer Spannungsausgleichshülse 26 umschlossen, deren flanschartiger Fuss zwischen zwei elektrischen Isolierscheiben 28 liegt. Eine Haltescheibe 32 sowie ein Befestigungsteil 34 dienen zur Halterung der Anordnung. Stirnseitig hat das Heizrohr 20 einen Materialeintritt 36. Am elektrodenseitigen Ende ist ein Materialaustritt 38 vorgesehen, der als Düsenanschluss ausgebildet sein kann. Ein Doppelpfeil kennzeichnet die Material-Strömungsrichtung(en).

Man erkennt, dass die von Wärmedehnungen am Heizleiter 20 ausgehenden mechanischen Spannungen im Bereich des Verteilers 14 von dem langen und gleichmässig temperierten Rohr 30 gut abgefangen und aufgenommen werden. Anstelle des Heizrohrs 20 ist es auch möglich und erfindungsgemäss vorgesehen, einen zentralen Heizstab mit aussenliegendem Ausgleichsrohr 30 zu verwenden. Eine andere Alternative ist ein aussenliegendes Heizrohr mit innenliegendem Ausgleichsstift, wodurch sowohl Temperatur- als auch Spannungsausgleich auf einfache Weise gewährleistet werden.

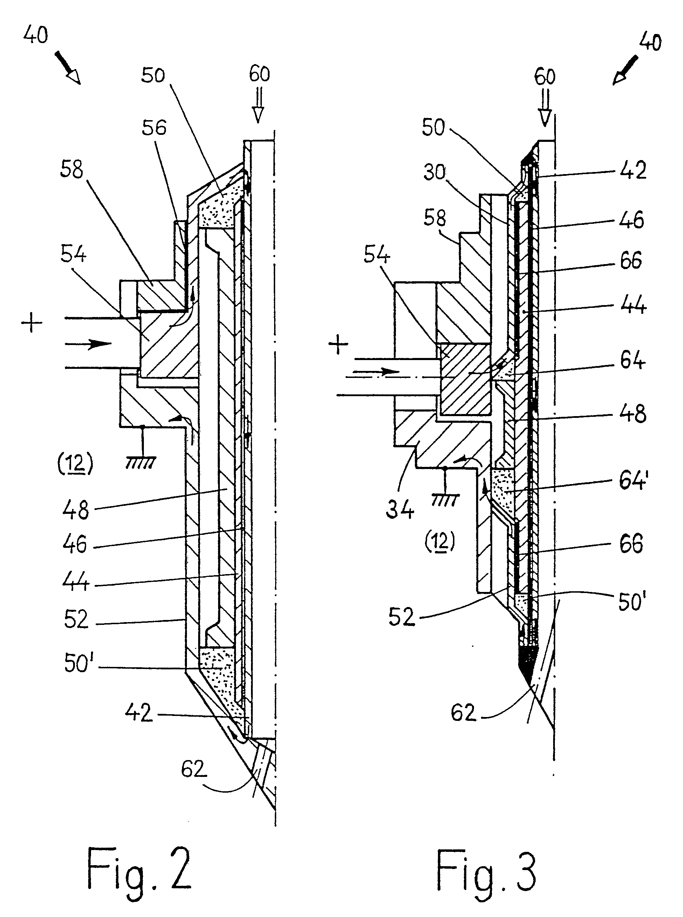

Fig. 2 zeigt eine allgemein mit 40 bezeichnete Düse, die ein inneres Heizrohr 42 mit oberem Materialeintritt 60 und unterem Materialaustritt 62 hat. Eine Isolier-Hüllschicht 46 trennt das innere Heizrohr 42 von einem Wärmeausgleichs- oder Leitrohr 44, das von einem Stützrohr 48 dicht umschlossen ist. Die Enden des Stützrohrs 48 und des Leitrohrs 44 sind mit Isolationen 50, 50' gegenüber dem Hülsenteil einer Elektrode 54 einerseits und einem äusseren Rohr 52 andererseits abgestützt. Die Elektrode 54 ist mittels einer Isolation 56 von einer zur Befestigung dienenden Hülse 58 elektrisch getrennt. Das äussere Rohr 52 dient zur Stromrückführung an einen mit dem Gehäuse 12 verbundenen Masse-Anschluss.

Bei herkömmlichen Düsen ähnlicher Bauart wird die Wärmeabfuhr im mittleren Bereich durch einen Luftspalt stark behindert; die installierte Heizleistung führt dann zu grossen Temperatursteigerungen. Demgegenüber wird erfindungsgemäss die im mittleren Bereich zusätzlich erzeugte Wärme über das Leitrohr 44 zu den vergleichsweise kühleren Enden geleitet. Bevorzugt besteht das Wärmeausgleichs- oder Leitrohr 44 aus einem Material mit hohem Wärmeleitwert, beispielsweise Kupfer und Kupferlegierungen, Silber, Aluminium usw.

Die in Fig. 3 dargestellte Düse 40 ist von prinzipiell ähnlichem Aufbau. Hier ist das Leitrohr 44 nur im mittleren Bereich von einem Rohrabschnitt 48 abgestützt, das durch Isolationen 64, 64' von Spannungsausgleichselementen 30, 52 elektrisch getrennt ist. Eine Isolier-Hüllschicht 66 trennt das Leitrohr 44 elektrisch von den stromführenden Ausgleichselementen 30, 52.

Heisskanalelemente der Konstruktion gemäss Fig. 3 weisen eine Kombination von Massnahmen zum Längen- und Dehnungs-Ausgleich auf. Wegen der nahezu gleichen Temperatur von innerem Rohr 42 und äusserem Rohr 30 bzw. 52 entstehen Spannungen infolge von Wärmedehnung kaum oder gar nicht. Etwaige restliche Spannungen lassen sich durch Längenbemessung des inneren Rohrs 42 im Verhältnis zu dem äusseren Rohr 30 bzw. 52 in beherrschbare Grössenordnung bringen.

Eine Vergleichsmässigung der Temperatur durch Wahl geeigneter Isoliermittel ist bei Heisskanalelementen dieses Typs nicht ohne weiteres möglich. Um die erhöhte Wärmeabfuhr in der Mitte auszugleichen, fördert das Leitrohr 44 die an den Enden anfallenden Wärmemengen in die Mitte, so dass ein Temperaturausgleich stattfindet, ohne dass der Ausgleich mechanischer Spannungen infolge von Wärmedehnungen beeinträchtigt würde. Die Erfindung zieht auch in Betracht, anstelle eines Wärmeausgleichs- oder Leitrohrs 44 eine Düse mit einem äusseren Heizrohr und einem innenliegenden Wärmeausgleichsstift vorzusehen.

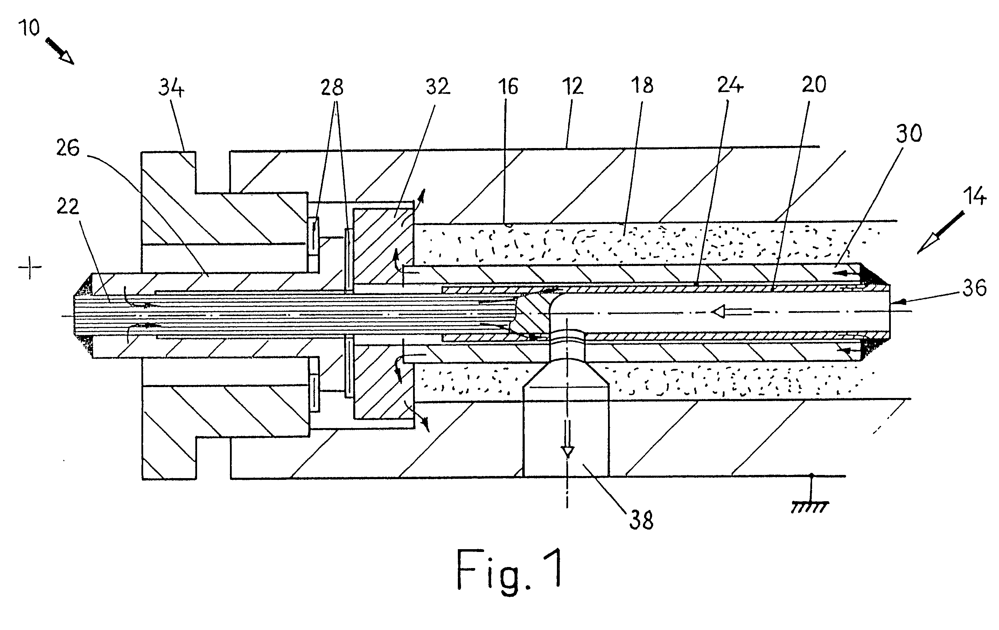

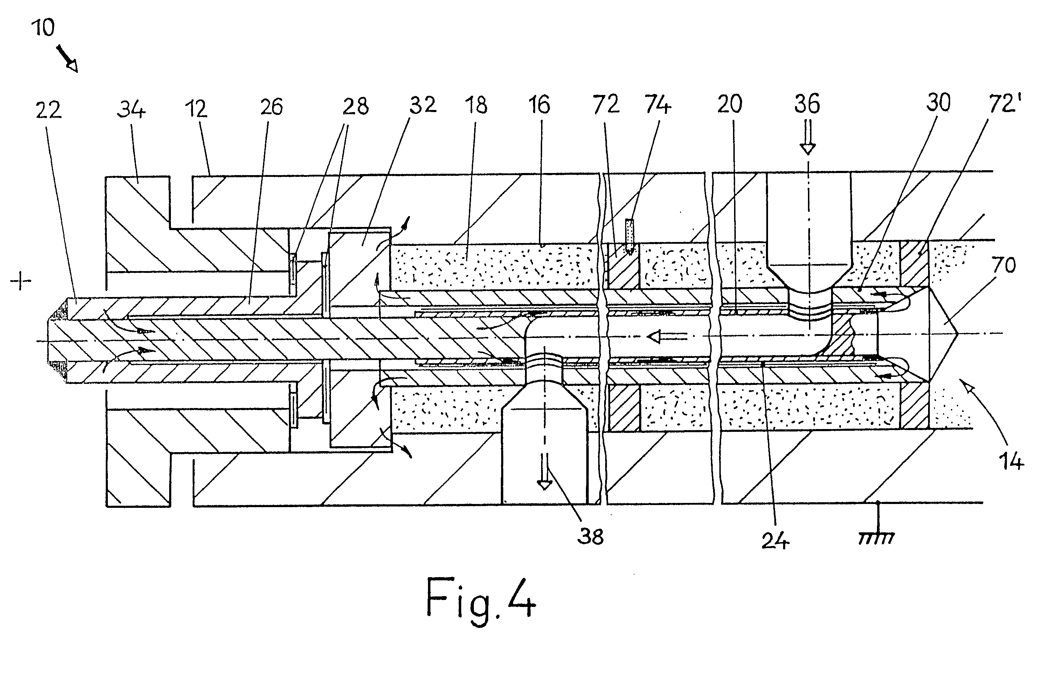

Das Ausführungsbeispiel der Fig. 4 ähnelt allgemein demjenigen der Fig. 1. Bei derartigen Vorrichtungen kann wegen des Strömungswiderstandes ein Druckunterschied zwischen dem Eintritt 36 und dem Austritt 38 entstehen, der eine Axialverschiebung der Isolierung gegenüber dem Rohr 20 bis 30 hervorruft. Um dem zu begegnen, sieht die Erfindung Stütz- oder Trennscheiben 72, 72' zwischen jedem Ein- und Ausgang vor, d.h. in Axialabständen jeweils zwischen Materialeintritt 36 und Materialaustritt 38. Zur Axialfixierung der Scheiben 72, 72' dienen Fixierelemente 74, beispielsweise Gewindestift, Sicherungsschrauben bzw. -ringe u.dgl.

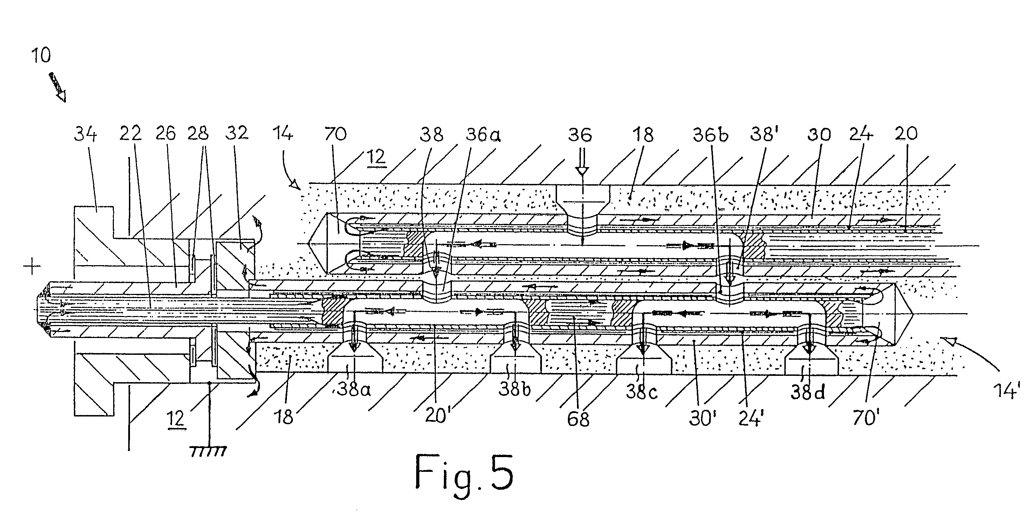

Die in Fig. 5 dargestellte Vorrichtung 10 bildet eine Mehrfach-Spritzanordnung von grundsätzlich mit den vorgenannten Ausführungsbeispielen vergleichbarem Aufbau. Diese Konstruktion ermöglicht es, auch bei sehr schnellen Füllvorgängen in Werkzeugen mit mehreren Kavitäten deren gleichmässige Befüllung zu erreichen. Dazu sind zwei Verteiler 14, 14' in paralleler Anordnung mit geringem Abstand zueinander elektrisch isoliert angeordnet. Der Materialeintritt 36 des oberen Verteilers 34 liegt in der Mitte zwischen zwei Materialaustritten 38, 38'. Letztere stehen jeweils den Materialeintritten 36a, 36b des unteren Verteilers 14' gegenüber. Auch dieser hat jeweils symmetrische Verzweigungen. So befindet sich der Materialeintritt 36a in der Mitte zwischen Materialaustritten 38a und 38b; der andere Materialeintritt 36b liegt in der Längsmitte der Materialaustritte 38c und 38d. Um auszuschliessen, dass momentan unterschiedliche Drücke zu ungleichmässiger Befüllung führen, ist zwischen den Materialaustritten 38b und 38c ein Zwischenstück 68 angeordnet. Es besteht vorzugsweise aus gut leitendem Material und ist mit dem inneren Heizrohr 20 leitend verbunden oder einstückig. Die symmetrische Anordnung gewährleistet nun, dass von jedem Materialeintritt 36 bzw. 36a, 36b gleich grosse Wege zu den Materialaustritten 38, 38'; 38a bis d vorhanden sind, wodurch gleichmässige Füllvorgänge sichergestellt sind.

In den Rahmen der Erfindung fallen zahlreiche Abwandlungen. So können die einzelnen Befestigungsteile und -elemente je nach der anwendungstechnischen Aufgabenstellung unterschiedlich gestaltet sein. Auch ist die angegebene Polarität nur als Beispiel zu werten; ohne das Prinzip der Erfindung zu verlassen, könnte auch der Pluspol einer Spannungsquelle mit dem Masse-Anschluss und die Elektrode 22 mit dem Minuspol verbunden sein.

*Legende PA 460 EP*

| + | elektr. Anschluss |
| 〰 | Masse-Anschluss |
| 10 | Vorrichtung |
| 12 | Gehäuse |
| 14, 14' | Verteiler |
| 16 | Hohlraum(begrenzung) |
| 18 | Wärmeisolation |
| 20, 20' | Heizleiter |
| 22 | Elektrode |
| 24 | Isolier-Hüllschicht |
| 26 | Spannungsausgleichshülse |
| 28 | elektr. Isolierscheiben |
| 30, 30' | Spannungsausgleichsrohr |
| 32 | Haltescheibe |
| 34 | Befestigungteil |
| 36; 36a, b | Materialeintritt |
| 38, 38'; 38a...d | Düsenanschluss/ Materialaustritt |
| 40 | Düse |
| 42 | inneres Heizrohr |
| 44 | Wärmeausgleichs-/Leitrohr |
| 46 | Isolier-Hüllschicht |
| 48 | Stützrohr(abschnitt) |
| ⟹ | Strömungsrichtung |
| → | Stromverlauf |
| 50, 50' | Isolationen |
| 52 | äusseres Heizrohr |
| 54 | Elektrode |
| 56 | Isolation |
| 58 | Hülse |
| 60 | Materialeintritt |
| 62 | Materialaustritt |
| 64, 64' | Isolationen |
| 66 | Isolier-Hüllschicht |
| 68 | Zwischenstück |
| 70, 70' | Verschlussstück |
| 72, 72' | Trennscheiben |
| 74 | Fixierelement |
| 76 | Isolierung |

## Patentansprüche

1. Vorrichtung (10) zum Heisskanal-Spritzgiessen mit einem Gehäuse (12), einem Verteiler (14) sowie mit an den Verteiler angeschlossenen, Düsen (40) bildenden konzentrischen Anordnungen von äusseren und inneren Heizelementen (20, 42, 52) aus elektrisch leitendem Material, wobei das innere Heizelement in Gestalt mindestens eines gegebenenfalls gestufte Abschnitte aufweisenden Heizrohres einen Düsenkanal für die Spritzgussmasse bildet, dadurch gekennzeichnet, dass koaxial zu einem Heizelement (52, 42) ein Wärmeausgleichs- oder Leitrohr (44) angeordnet ist, so dass eine im wesentlichen gleichförmige Temperatur der Spritzgussmasse über die Länge des Düsenkanals erreicht wird.

2. Vorrichtung nach Anspruch 1, dadurch gekennzeichnet, dass das Leitrohr (44) metallisch ist, insbesondere aus gut leitendem Material wie Kupfer, Aluminium, Silber o.dgl., und dass es zu den Heizelementen (20, 42, 52) hin elektrisch isoliert ist.

3. Vorrichtung nach Anspruch 1 oder 2, dadurch gekennzeichnet, dass das Leitrohr (44) durch zumindest eine Hüllschicht (24; 46, 66), namentlich aus Aluminiumoxid, zumindest teilweise isoliert ist.

4. Vorrichtung nach einem der Ansprüche 1 bis 3, dadurch gekennzeichnet, dass an wenigstens einem Ende des Leitrohres (44) eine Isolierung vorhanden ist, insbesondere ein Keramikring (50, 50') als Isolierabstützung.

5. Vorrichtung nach einem der Ansprüche 1 bis 4, dadurch gekennzeichnet, dass zwischen äusserem Heizrohr (52) und Gehäuse (12) zumindest ein Stützkörper (48) angeordnet ist, der sich axial wenigstens über einen Längen-Teilbereich des Leitrohres (44) erstreckt.

6. Vorrichtung wenigstens nach Anspruch 1 und 5, dadurch gekennzeichnet, dass das Leitrohr (44) zwischen dem inneren Heizelement (42) und dem Stützkörper (48) angeordnet ist.

7. Vorrichtung nach Anspruch 5 oder 6, dadurch gekennzeichnet, dass der Stützkörper (48) als Rohr oder Rohrabschnitt ausgebildet und mit verstärkten oder verbreiterten Enden versehen ist, die elektrisch und chemisch isoliert sind.

8. Vorrichtung nach wenigstens einem der Ansprüche 1 bis 7, dadurch gekennzeichnet, dass ausser dem Leitrohr (44) noch Ausgleichselemente (26, 30) vorhanden sind und dass zwischen diesen und dem Leitrohr zumindest in einem Längen-Teilbereich wenigstens eine Isolation (24, 28, 66) angeordnet ist.

9. Vorrichtung nach Anspruch 8, dadurch gekennzeichnet, dass die Ausgleichselemente zumindest ein Spannungsausgleichsrohr (30, 52) aufweisen und ihre Länge mindestens gleich dem Rohrinnendurchmesser ist.

10. Vorrichtung nach Anspruch 8 oder 9, dadurch gekennzeichnet, dass das Ausgleichs- und Heizelement (z.B. 30, 30') entweder eine stirnseitige Öffnung und zumindest eine Öffnung (z.B. 36, 38) am Umfang oder zumindest zwei Öffnungen (z.B. 36a, b; 38a...d) am Umfang aufweist.

11. Vorrichtung nach wenigstens einem der Ansprüche 1 bis 10, dadurch gekennzeichnet, dass zwischen äusserem Heizrohr (52) und Gehäuse (12), insbesondere verteilerseitig, wenigstens eine Trennscheibe (72) vorgesehen ist, die insbesondere aus Stahl oder anderem hochfestem Material besteht und eine Isolierung (76) aufweist, beispielsweise eine Beschichtung und einen Aussenring oder -wulst u.dgl.

12. Vorrichtung nach Anspruch 11, dadurch gekennzeichnet, dass die bzw. jede Trennscheibe (72, 72') in Axialrichtung fixiert ist und dicht an das Gehäuse (12) und/oder an das äussere Heizrohr (52) bzw. an das Ausgleichsrohr (30, 30') anschliesst.

13. Vorrichtung nach wenigstens einem der Ansprüche 1 bis 12, dadurch gekennzeichnet, dass wenigstens zwei Verteilerrohre (14, 14') mit Teilen ihrer Mantelflächen formschlüssig und/oder in Linienberührung, jedoch elektrisch isoliert, aneinander anschliessen und gemeinsam mit Abstand zum Gehäuse (12) darin angeordnet sind.

14. Vorrichtung nach Anspruch 13, dadurch gekennzeichnet, dass zwei benachbarte Heizrohre (20, 20') entweder in gleicher Richtung verlaufen oder sich im Bereich von Übertrittsöffnungen (38, 38'; 36a, b) von einem Rohr zum anderen kreuzen, wobei den Übertrittsöffnungen jeweils zwei annähernd symmetrische Ausgänge (z.B. 38, 38') zugeordnet sind.

15. Vorrichtung nach Anspruch 13 oder 14, dadurch gekennzeichnet, dass der maximale lichte Abstand zwischen den Rohren (14, 14' bzw. 20, 20') einen Rohraussendurchmesser beträgt.

16. Vorrichtung nach wenigstens einem der Ansprüche 1 bis 15, dadurch gekennzeichnet, dass einem Verteilerrohr (24) mit einem Eingang (36) und zwei Ausgängen (38, 38') ein Verteilerrohr (14') mit zwei Eingängen (36a, b) und vier Ausgängen (38a bis d) derart nachgeordnet ist, dass die nachgeordneten Eingänge (36a, b) jeweils den vorgeordneten Ausgängen (38, 38') gegenüberstehen.

17. Vorrichtung nach Anspruch 16, dadurch gekennzeichnet, dass der zwischen den beiden inneren (38b, c) der vier Ausgänge (38a bis d) befindliche Kanalabschnitt (36) durch ein Zwischenstück (68) verschliessbar bzw. verschlossen ist.

## Claims

1. Device (10) for hot runner injection moulding, including a case (12), a manifold (14) as well as concentric arrangements of outer and inner heating elements (20, 42, 52) made of electrically conductive material and forming nozzles (40) connected to the manifold, the inner heating element being at least one heating tube that may have shoulder sections and forming a hot runner channel for the injection moulding compound, comprising a heat balancing or conductor tube (44) arranged coaxially to one heating element (52, 42), whereby an essentially balanced temperature in the injection moulding compound is achieved along the length of the hot runner channel.

2. Device according to claim 1, wherein the conductor tube (44) is made of metal, in particular of highly conductive material such as copper, aluminium, silver or the like, and wherein it is electrically insulated relative to the heating elements (20, 42, 52).

3. Device according to claim 1 or claim 2, wherein the conductor tube (44) is at least partly insulated by at least one envelope (24; 46, 66), made especially of alumina.

4. Device according to any one of claims 1 to 3, wherein at one end of the conductor tube (44) at least, an insulator is provided, in particular an insulator ring (50, 50') serving as a support.

5. Device according to any one of claims 1 to 4, wherein between the outer heating tube (52) and the case (12), there is at least one supporting member (48) extending in an axial direction at least over part of the length of the conductor tube (44).

6. Device according to at least claims 1 and 5, wherein the conductor tube (44) is arranged between the inner heating element (42) and the supporting member (48).

7. Device according to claim 5 or claim 6, wherein the supporting member (48) is a tube or a tube section and is provided with reinforced or enlarged ends that are insulated electrically and chemically.

8. Device according to any one of claims 1 to 8, wherein besides the conductor tube (44), there are further relief elements (26, 30), and wherein at least one insulator (24, 28, 66) is arranged between the relief elements and the conductor tube, extending at least over part of the latter's length.

9. Device according to claim 8, wherein the relief elements include at least one stress relief tube (30, 52) and wherein their length equals at least the inner tube diameter.

10. Device according to claim 8 or claim 9, wherein the relief and heating element (e.g. 30, 30') has either a facing opening and at least one peripheral opening (e.g. 36, 38) or at least two peripheral openings (36a, 36b; 38a...d).

11. Device according to any one of claims 1 to 10, wherein at least one partition disk (72) is provided between the outer heating tube (52) and the case (12), in particular towards the manifold (14), the partition disk being especially of steel or like high-strength material and comprising an insulator (76) such as a coating and an outer ring or bulb, etc.

12. Device according to claim 11, wherein the or each partition disk (72, 72') is fixed in an axial direction and tightly joins the case (12) and/or the outer heating tube (52) or the relief tube (30, 30'), respectively.

13. Device according to any one of claims 1 to 12, wherein at least two manifold tubes (14, 14') join each other positively, but with electrical insulation, by parts of their shell surfaces or by line contact, and are jointly arranged in the case (12) with a spacing relative thereto.

14. Device according to claim 13, wherein two adjacent heating tubes (20, 20') either extend in the same direction or cross in a zone of flow openings (38, 38'; 36a, 36b) from one tube to another, two approximately symmetrical outflows (e.g. 38, 38') each being associated to the flow openings.

15. Device according to claim 13 or claim 14, wherein the maximum clear distance between the tubes (14, 14' and 20, 20', respectively) equals an outer tube diameter.

16. Device according to any one of claims 1 to 15, wherein downstream of a manifold tube (14) having an inflow (36) and two outflows (38, 38'), there is a manifold tube (14') having two inflows (36a, 36b) and four outflows (38a...d) such that the downstream inflows (36a, 36b) are juxtaposed to the upstream outflows (38, 38').

17. Device according to claim 16, wherein the channel section (36) between the inner two (38b, 38c) of the four outflows (38a...d) is adapted to be closed or is closed by a filling piece (68).

**Revendications**

1. Appareil (10) de moulage par injection à canaux chauffants, présentant un carter (12), un distributeur (14) et, en raccord au distributeur et en forme de buses (40), des dispositions concentriques d'éléments chauffants externes et internes (20, 42, 52) dans un matériau à conductibilité électrique, l'élément chauffant interne constituant, sous la forme d'un tube de chauffage présentant éventuellement des sections étagées, un canal d'écoulement pour la matière à mouler par injection, caractérisé en ce que, en position coaxiale par rapport à un élément de chauffage (52, 42), se trouve un tuyau de compensation de la température resp. conducteur de la chaleur (44), obtenant ainsi une température essentiellement uniforme de la matière à mouler par injection, tout au long du canal d'écoulement.

2. Dispositif conforme à la revendication 1, caractérisé en ce que le tuyau conducteur (44) est en métal, en particulier en un métal à bonne conductivité, comme: cuivre, aluminium, argent, ou sim., et en ce qu'il présente une isolation électrique par rapport aux éléments chauffants (20, 42, 52).

3. Dispositif conforme à la revendication 1 ou 2, caractérisé en ce que le tuyau conducteur (44) présente au moins une gaine (24; 46, 66), en particulier en oxyde d'aluminium, qui offre une isolation au moins partielle.

4. Dispositif conforme à au moins une des revendications 1 à 3, caractérisé en ce que, sur au moins une des extrémités du tuyau conducteur (44), se trouve une isolation, en particulier un anneau en céramique (50, 50'), comme appui d'isolation.

5. Dispositif conforme à une des revendications 1 à 4, caractérisé en ce que, entre le tuyau chauffant externe (52) et le carter (12), est disposé au moins un corps de support (48) qui s'étend en direction axiale au moins sur une partie de la longueur du tuyau conducteur (44).

6. Dispositif conforme au moins aux revendications 1 et 5, caractérisé en ce que le tuyau conducteur (44) est disposé entre l'élément de chauffage interne (42) et le corps de support (48).

7. Dispositif conforme à la revendication 5 ou 6, caractérisé en ce que le corps de support (48) est conformé comme un tuyau ou un segment de tuyau, et en ce qu'il présente des extrémités renforcées ou élargies qui ont une isolation électrique et chimique.

8. Dispositif conforme à au moins une des revendications 1 à 7, caractérisé en ce que, en dehors du tuyau conducteur (44), sont présents aussi des éléments d'égalisation et de compensation (26, 30), et en ce que, entre ces éléments et le tuyau conducteur, est disposée, au moins sur une partie de la longueur, au moins une isolation (24, 28, 66).

9. Dispositif conforme à la revendication 8, caractérisé en ce que les éléments d'égalisation présentent au moins un tuyau d'égalisation de la tension (30, 52), et en ce que leur longueur est au moins égale au diamètre interne du tuyau.

10. Dispositif conforme à la revendication 8 ou 9, caractérisé en ce que l'élément d'égalisation et de chauffage (p. ex.: 30, 30') présente ou bien sur sa face une ouverture et au moins une ouverture (p. ex.: 36, 38) sur son périmètre ou bien au moins deux ouvertures (p. ex.: 36a, b; 38a...d) sur son périmètre.

11. Dispositif conforme à au moins une des revendications 1 à 10, caractérisé en ce que, entre le tuyau chauffant externe (52) et le carter (12), est prévu, particulièrement du côté du distributeur, au moins un disque de séparation (72) fabriqué en particulier en acier ou en un autre matériau à résistance élevée, et en ce qu'il présente une isolation (76), p. ex. un revêtement et un anneau ou un bourrelet extérieurs ou sim.

12. Dispositif conforme à la revendication 11, caractérisé en ce que le resp. chaque disque de séparation (72, 72') est fixé en direction axiale et en position étanche contre le carter (12) et/ou le tuyau chauffant externe (52) resp. le tuyau d'égalisation (30, 30').

13. Dispositif conforme à au moins une des revendications 1 à 12, caractérisé en ce qu'au moins deux tubes distributeurs (14, 14') se joignent entre eux par des parties de leurs surfaces latérales à contact géométrique complet et/ou en contact linéaire, tout en étant isolés électriquement, en étant disposés à l'intérieur du carter (12) ensemble à une certaine distance par rapport à ce dernier.

14. Dispositif conforme à la revendication 13, caractérisé en ce que deux tuyaux chauffants avoisinants (20, 20') sont disposés ou bien dans une même direction, ou bien qu'ils se croisent dans une zone d'ouvertures de passage (38, 38'; 36a, b) entre un tuyau et l'autre, aux ouvertures de passage étant respectivement coordonnées deux sorties presque symétriques (p. ex.: 38, 38').

15. Dispositif conforme à la revendication 13 ou 14, caractérisé en ce que l'écartement maximal entre les tuyaux (14, 14' resp. 20, 20') est égal à un diamètre extérieur d'un tuyau.

16. Dispositif conforme à au moins une des revendications 1 à 15, caractérisé en ce que, à un tuyau distributeur (14) avec une entrée (36) et deux sorties (38, 38') fait suite un tuyau distributeur (14') avec deux entrées (36a, b) et quatre sorties (38a à d) de manière que les entrées faisant suite (36a, d) font face respectivement aux sorties en amont (38, 38').

17. Dispositif conforme à la revendication 16, caractérisé en ce que le segment du canal (36) se trouvant entre les deux sorties intérieures (38b, c) des quatre sorties (38a à d) est resp. peut être fermé par une pièce intercalaire (68).

Fig. 1

Fig. 2

Fig. 3

0 194 460

Fig.4

Fig.5